# EUROPÄISCHE PATENTANMELDUNG

(11) **EP 1 008 827 A1**
(43) Veröffentlichungstag der Anmeldung: **14.06.2000**
(21) Anmeldenummer: 98811215.7
(22) Anmeldetag: 09.12.1998
(51) Int. Cl.: F28D 20/00, F24J 3/08

(54) **Wärmespeicher**

(71) Anmelder: Schlatter, Friedrich, 8610 Uster (CH)
(72) Erfinder: Schlatter, Friedrich, 8610 Uster (CH)
(74) Vertreter: Patentanwaltsbüro Feldmann AG

(57) **Zusammenfassung**

Eine Wärmespeicheranlage umfaßt einen im Erdreich (2) angeordneten Wärmespeicher (1), der mehrere Bereiche von Materialien aufweist. Mindestens eine Speicherlage (10) dient der Wärmeabgabe beziehungsweise der Wärmeaufnahme und ist mit einem Leitungsnetz (14,15) zur Zirkulation eines Wärmetransportmediums durchsetzt. Der Wärmespeicher (1) ist lagenförmig aufgebaut, so dass zwischen jeweils zwei Erdreichlagen (11) eine der Wärmeabgabe beziehungsweise Wärmeaufnahme dienende Speicherlage (10) aus einem Material mit gegenüber dem Erdreich erhöhter thermischer Leitfähigkeit angeordnet ist.

## Beschreibung

Die vorliegende Erfindung betrifft eine Wärmespeicheranlage, umfassend einen im Erdreich angeordneten Wärmespeicher, der mehrere Lagen von Materialien aufweist, wobei mindestens eine Lage als Speicherlage der Wärmeabgabe beziehungsweise der Wärmeaufnahme dient und mit einem Leitungsnetz durchsetzt ist zur Zirkulation eines Wärmetransportmediums entsprechend dem Oberbegriff des Patentanspruches 1.

So ist beispielsweise aus der CH-624 752 ein Wärmespeicher bekannt geworden, der im Erdreich angeordnet ist. Hier sind verschiedene Graben vorgesehen, in denen Wärmeaustauschrohre verlegt sind, wobei der Graben so ausgestaltet ist, dass er besonders dazu geeignet ist, in den Graben eingeleitete Wärme durch Wärmeleitung sowie durch Wärmekonvektion an das Erdreich abzugeben, wobei das Erdreich das Speichermedium darstellen soll. Da aber das Erdreich im Vergleich zu den Materialien in den Gräben eher eine geringere Wärmeleitfähigkeit aufweist, ergibt sich so ein insgesamt äusserst träger Wärmespeicher.

Aus der CH-A-661 340 ist ein kombinierter Wärmekollektor und -speicher bekannt. Dieser sieht vor, eine Absorberschicht aus Asphalt zu erstellen, welche durch Sonnenenergie erwärmt wird und an eine darunter angeordnete Speicherschicht aus Geröllbeton abgeben soll, die selber wiederum auf dem Erdreich aufliegt. Das Leitungsnetz für den Wärmeaustausch ist in der Absorberschicht im Grenzbereich zur Speicherschicht angebracht. Diese Lösung ist physikalisch gesehen ein Speicher mit geringer Speicherkapazität. Die Wärmeenergie kann relativ direkt an die Speicherschicht abgegeben werden, wird jedoch von dieser sogleich wieder an die Absorberschicht abgegeben, wenn das Temperaturgefälle sich umkehrt.

Es ist die Aufgabe der vorliegenden Erfindung, eine Wärmespeicheranlage zu schaffen, die eine hohe Speicherkapazität aufweist und zudem schnell aufladbar ist.

Diese Aufgabe löst eine Wärmespeicheranlage der eingangs genannten Art, welche die Kennzeichen des Patentanspruches 1 aufweist. Dank des mehrschichtigen Aufbaus des Wärmespeichers ist die schnelle Wärmeaufnahme in die Schichten mit hoher thermischer Leitfähigkeit sichergestellt, worauf diese in einem längeren Zeitraum kontinuierlich die Wärme an die an sie angrenzenden Erdreichlagen abgeben kann. Prinzipiell kann die Speicherlage eine beliebig voluminöse Gestalt haben. Für eine optimale Wärmeübertragung ist es jedoch vorteilhaft, die Speicherlage flächig zu gestalten. Bei einer solchen Gestaltung ist es am einfachsten möglich, mehrere solche Wärmespeicherlagen übereinander unter Zwischenfügung von Lagen von Erdreich zu einem Wärmespeicher zu bilden. Dies ist nicht nur besonders kostengünstig sondern lässt es mit entsprechender Steuerung der Leitungsnetze auch zu, eine Wärmespeicheranlage zu bilden, bei der der Wärmespeicher verschiedene Speicherlagen mit unterschiedlicher Temperaturführung haben kann. Als besonders vorteilhaft hat sich insbesondere erwiesen, wenn die Speicherlage mit erhöhter thermischer Leitfähigkeit aus metallhaltigen Abfällen mit Korrosionsschutz, insbesondere Bitumenemulsion, besteht. Die Bitumenemulsion hat dabei die Doppelfunktion des Korrosionsschutzes, ohne die thermische Leitfähigkeit erheblich zu reduzieren. Obwohl eine derart gestaltete Wärmespeicheranlage sich besonders schnell erwärmen lässt, unterbindet der Aufbau bereits weitgehend eine Wärmeabgabe. Trotzdem kann der Wärmespeicher insgesamt mit einer umgebenden Wärmeisolation versehen sein.

Der flächige, mehrlagige Aufbau der erfindungsgemässen Wärmespeicheranlage prädestiniert diese zur Verwendung unter einem Strassenstück, einem Parkplatz oder einem Gebäude, da sie somit gleichzeitig als Unterbau dienen kann. Die kostengünstige Errichtung eines solchen Wärmespeichers und die enorme Grösse, die sich hiermit erzielen lässt, macht eine solche Wärmespeicheranlage auch besonders gut verwendbar zur Beheizung von Gebäuden, Parkplätzen oder Strassen. Die ökologischen Aspekte der erfindungsgemässen Wärmespeicheranlage sowie die preiswerte Herstellung machen dieselbe auch geeignet für die Trocknung von Holz oder landwirtschaftlichen Produkten.

In den Zeichnungen sind Ausführungsbeispiele des Erfindungsgegenstandes und deren Verwendung dargestellt und anhand der nachfolgenden Beschreibung erläutert. Es zeigt:
- Figur 1: einen Vertikalschnitt durch einen im Erdreich angeordneten Wärmespeicher und
- Figur 2: eine ebensolche Wärmespeicheranlage im Vertikalschnitt mit zwei Speicherlagen.
- Figur 3: zeigt eine Wärmespeicheranlage in symbolischer Darstellung, bei der die Speicherlagen stufenweise geschichtet im Erdreich an einer Hanglage angeordnet sind.

Die erfindungsgemässe Wärmespeicheranlage 1 ist definitionsgemäss im Erdreich 2 verlegt. Hierzu wird eine Grube 4 ausgehoben, in der der Wärmespeicher verlegt wird, worauf gegebenenfalls schlussendlich wieder eine Humusschicht 3 aufgetragen wird, so dass der Wärmespeicher im Gelände nicht oder kaum wahrnehmbar ist. Wird die erfindungsgemässe Wärmespeicheranlage jedoch verwendungsgemäss unter einem Strassenstück, einem Parkplatz oder einem Gebäude angeordnet, so entfällt selbstverständlich die Humusschichtabdeckung.

Hat man im Erdreich 2 die Grube 4 ausgehoben, so kann man diese sinnvollerweise mit einer Sperrschicht 17 abdecken.

Eine solche Auskleidung 17 kann beispielsweise aus einer geotextilen Lage oder Folie bestehen. Eine solche Auskleidung hat nur eine geringe thermische Bedeutung, sondern sie dient vielmehr dazu sicherzustellen, dass weniger Fremdeinflüsse vom umgebenden Erdreich 2 aus in den erdverlegten Wärmespeicher 1 gelangen. So können solche Folien beispielsweise sicherstellen, dass nicht unerwünschterweise Wurzelwerk in den Bereich der Wärmespeicheranlage 1 hineinwächst. Auch seitliche Wassereinbrüche können je nach Art der verwendeten Auskleidung 17 hiermit abgehalten werden.

In den Grubenboden kommt eine erste Erdreichlage 11 und darüber eine erste Speicherlage 10. Darauf folgt wiederum eine Erdreichlage 11, worauf wieder eine Speicherlage 10 folgen kann. Dank der lagenförmigen Gestaltung des Speichers kann eine hohe Wärmekapazität pro Volumen erzielt werden. Bei einem solchen Aufbau mit mehreren Speicherlagen lässt sich die Wärmespeicheranlage auch besonders vorteilhaft steuern. So wird man vorteilhaft die mittleren beziehungsweise tieferen Lagen, die besonders gut isoliert sind, zuerst nutzen zur Zuführung zusätzlicher Wärmeenergie bis zu einem vorgegebenen Temperaturwert, bevor man die angrenzenden Lagen weiter aufheizen wird. Andererseits wird man den äusseren Lagen, die am ehesten zu Energieverlust neigen, auch zuerst Energie entziehen, bevor man die besser geschützten inneren Lagen anbraucht.

Jede Speicherlage besteht aus einem Material mit gegenüber dem angrenzenden Erdreich wesentlich erhöhter thermischer Leitfähigkeit. Insbesondere eignen sich hierzu metallhaltige Abfälle, die so zerkleinert sind, dass ein schüttfähiges Gut vorhanden ist.

Bei der Herstellung wird man somit nach der ersten Erdreichlage hierauf ein Leitungsnetz für die Energiezuführung beziehungsweise für den Energieabtransport verlegen. Hierbei kann es sich um ein einziges Leitungsnetz oder auch um mehrere Leitungsnetze für unterschiedliche Wärmetransportmedien handeln. In der Zeichnung ist ein Leitungsnetz 14 für flüssige Wärmetransportmedien und ein Leitungsnetz 15 für gasförmige Wärmetransportmedien gezeichnet. Das Leitungsnetz kann aus Rohren oder Schläuchen gefertigt sein. Ist das Leitungsnetz 14,15 verlegt, so wird man das schüttfähige Material mit gegenüber dem Erdreich wesentlich erhöhter thermischer Leitfähigkeit anbringen. Diese Schicht aus vorteilhafterweise metallhaltigen Abfällen wird man mit einem Korrosionsschutz versiegeln. Besonders vorteilhaft erfolgt dies mit einer Bitumenemulsion. Eine Mischung aus metallhaltigen Abfällen und Bitumenemulsion ergibt eine giessfähige Masse, die ähnlich wie Beton verarbeitbar ist und die sich ebenso nach einer gewissen Zeit verfestigt. Sobald diese Schicht verfestigt ist, kann darüber die nächste Erdreichlage 11 aufgebracht werden.

Wieviel verschiedene Lagen übereinander vorteilhafterweise angebracht werden, ist von geologischen und hydrologischen Gegebenheiten abhängig und auch eine Frage der ökonomischen Optimierung. Aus diesen Gründen lassen sich diesbezüglich keine Angaben machen.

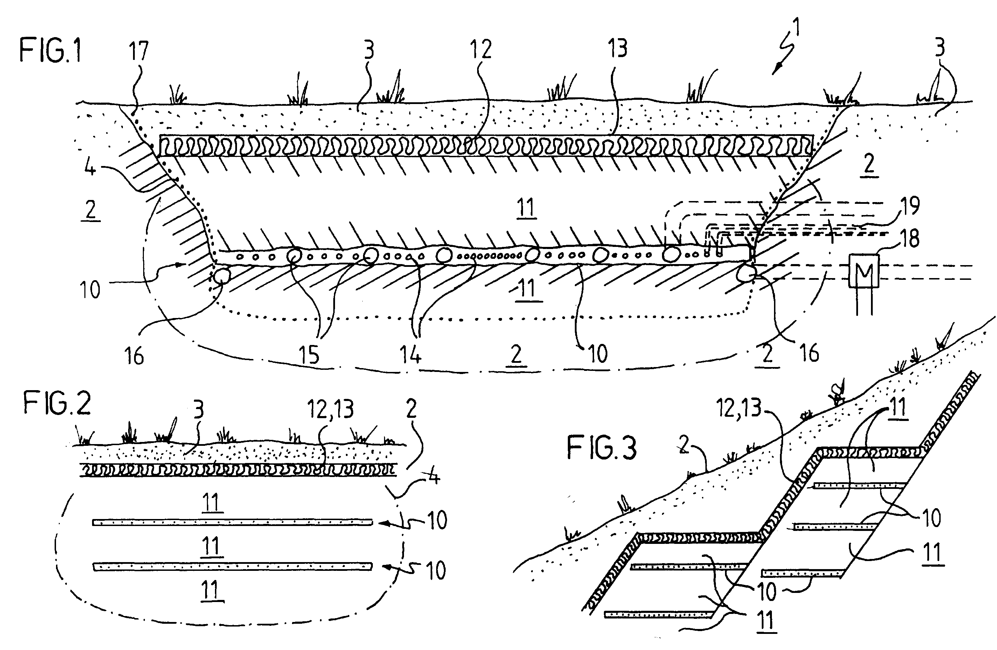

Interessant ist in manchen Fällen insbesondere auch die Möglichkeit der stufenweisen Anordnung der verschiedenen Lagen 10 und 11, falls eine Wärmespeicheranlage in einem Hangbereich angebracht werden soll. Die meisten bekannten erdverlegten Wärmespeicheranlagen sind für die Anordnung in einer Hanglage nicht geeignet. Dies Figur 3 zeigt jedoch deutlich, dass die erfindungsgemässe Lösung für Hanglagen äusserst brauchbar ist.

Arbeitet man ohne Auskleidung 17 der Grube 4 oder verwendet man eine Auskleidung 17, die keine oder keine vollständig wassersperrende Schicht ist, so wird man vorteilhafterweise im Grubengrundbereich mindestens eine Entwässerungsleitung 16 vorzugsweise dem Rand entlang verlegen. Gerade bei Ausführungen, die ohne Auskleidung realisiert werden, gelangt in die Entwässerungsleitung 16 auch Sickerwasser, das durch die darüber liegenden Speicherlagen 10 bereits erwärmt ist. Um auch dieser Energie nicht verlustig zu gehen, kann die Entwässerungsleitung 16 mit einem symbolisch dargestellten Wärmetauscher 18 in Verbindung stehen.

Ueber der obersten Erdreichlage 11 der Wärmespeicheranlage 1 wird man vorteilhafterweise mindestens eine Wärmeisolation 12 und/oder Regenabdichtung 13 anordnen. Dabei kann die Wärmeisolation 12 an sich bereits Eigenschaften aufweisen, die eine zusätzliche Regenabdichtung 13 nicht mehr erforderlich machen. Dies ist jedoch keineswegs zwingend. Verwendet man beispielsweise zur Wärmeisolation 12 eine Schicht aus mineralischen Fasern, so ist es unbedingt zu empfehlen, diese hydrologisch abzudichten.

Die erfindungsgemässe Wärmespeicheranlage ist ausserordentlich preiswert. Aus diesen Gründen lässt sich eine solche Wärmespeicheranlage nicht nur für die Beheizung von Gebäuden verwenden sondern auch zum Beheizen von Parkplätzen oder Strassen. Dabei kann besonders vorteilhaft ein solcher Speicher auch direkt unter den zu beheizenden Objekten angebracht werden. Dabei entfällt eine gesonderte Aushebung, man wird lediglich den Bereich unter den zu beheizenden Objekten etwas tiefer ausheben als bisher. Bei einer solchen Anlage kann vernünftigerweise das zu beheizende Objekt auch gleichzeitig das wärmeliefernde Objekt sein. Dies trifft natürlich insbesondere bei Strassen und Parkplätzen zu. Hier werden dann die Zuleitungen und Ableitungen zum Leitungsnetz 14,15 in der Speicherlage beziehungsweise zur Speicherlage besonders kurz.

Obwohl die Lagen aus Material mit erhöhter thermischer Leitfähigkeit gegenüber dem Erdreich als Speicherlagen 10 bezeichnet sind, dienen sie eigentlich der Wärmezuführung und -aufnahme zur Erdreichlage beziehungsweise von der Erdreichlage 11. Die Speicherung der Wärme übernimmt somit für die längerfristige Speicherung das Erdreich. Die Speicherlage 10 wirkt natürlich kurzfristig ebenfalls als Speicherlage. Die Optimierung eines Erdspeichers ist wesentlich abhängig von der volumenmässigen Verteilung der unterschiedlichen Lagen. Damit sich ein Speicher nicht zu schnell entleert, müssen die Schichten mit trägerer beziehungsweise geringerer thermischer Leitfähigkeit grösser sein als jene mit erhöhter thermischer Leitfähigkeit. Sinnvoll ist es, die Erdreichlage 11 zwischen zwei Speicherlagen 10 so zu gestalten, dass die Erdreichlage mindestens dreifach so hoch wie die Höhe einer Speicherlage 10 ist. Dieses Mindestverhältnis von 1:3 lässt sich mit Sicherheit erhöhen bis auf 1:6.

## Patentansprüche

1. Wärmespeicheranlage, umfassend einen im Erdreich (2) angeordneten Wärmespeicher (1), der mehrere Bereiche von Materialien aufweist, wobei mindestens eine Speicherlage (10) der Wärmeabgabe beziehungsweise der Wärmeaufnahme dient und mit einem Leitungsnetz (14,15) durchsetzt ist zur Zirkulation eines Wärmetransportmediums, dadurch gekennzeichnet, dass der Wärmespeicher (1) so lagenförmig aufgebaut ist, dass zwischen jeweils zwei Erdreichlagen (11) eine der Wärmeabgabe beziehungsweise Wärmeaufnahme dienende Speicherlage (10) aus einem Material mit gegenüber dem Erdreich erhöhter thermischer Leitfähigkeit angeordnet ist und somit einen flächigen Wärmetauscher bildet, wobei das Volumen der Erdreichlagen (11) grösser ist als das Volumen der Lagen (10) aus Material mit erhöhter thermischer Leitfähigkeit.

2. Wärmespeicheranlage nach Anspruch 1, dadurch gekennzeichnet, dass mehrere flächige Speicherlagen (10) übereinander und unter Zwischenfügung von Lagen (11) von Erdreich zu einem Wärmespeicher gebildet sind. (Fig. 2)

3. Wärmespeicher nach Anspruch 2, dadurch gekennzeichnet, dass die Erdreichlage (11) zwischen zwei Speicherlagen höher als die Höhe einer Speicherlage (10) ist.

4. Wärmespeicheranlage nach Anspruch 1, dadurch gekennzeichnet, dass das Leitungsnetz (14,15) sowohl Rohre oder Schläuche für flüssige, wie auch solche für gasförmige Wärmeträger umfasst.

5. Wärmespeicheranlage nach Anspruch 1, dadurch gekennzeichnet, dass die Speicherlage (10) mit erhöhter thermischer Leitfähigkeit aus metallhaltigen Abfällen mit Korrosionsschutz, insbesondere Bitumenemulsion, besteht.

6. Wärmespeicheranlage nach Anspruch 1, dadurch gekennzeichnet, dass der Wärmespeicher (1) mit einer mindestens teilweise umgebenden Wärmeisolation (12) versehen ist.

7. Wärmespeicheranlage nach Anspruch 1, dadurch gekennzeichnet, dass distanziert über der obersten Wärmespeicherlage mindestens eine Wärmeisolation (12) und/oder Regenabdichtung (13) angeordnet ist.

8. Wärmespeicheranlage nach Anspruch 1, dadurch gekennzeichnet, dass der mindestens eine flächige Wärmetauscher in einer Grube (4) im Erdreich angeordnet ist und in der Grubensohle eine Entwässerungsleitung (16) angebracht ist.

9. Wärmespeicheranlage nach Anspruch 8, dadurch gekennzeichnet, dass die Entwässerungsleitung (16) mit einem Wärmetauscher (18) zusammenwirkt.

10. Verwendung der Wärmespeicheranlage nach mindestens einem der Ansprüche 1-8, dadurch gekennzeichnet, dass der Wärmespeicher unter einem Strassenstück, einem Parkplatz oder einem Gebäude angeordnet ist und somit als dessen Unterbau dient.

11. Verwendung der Wärmespeicheranlage nach mindestens einem der Ansprüche 1-8, dadurch gekennzeichnet, dass dieser zur Beheizung von Gebäuden, Parkplätzen oder Strassen dient.

12. Verwendung der Wärmespeicheranlage nach mindestens einem der Ansprüche 1-8, dadurch gekennzeichnet, dass dieser zur Trocknung von Holz oder landwirtschaftlichen Produkten dient.
